# EUROPÄISCHE PATENTANMELDUNG

(11) **EP 1 518 457 A1**
(43) Veröffentlichungstag der Anmeldung: **30.03.2005**
(21) Anmeldenummer: 04022924.7
(22) Anmeldetag: 27.09.2004
(51) Int. Cl.: A01M 3/02, A01M 1/22

(54) **Vorrichtung zum Töten oder Betäuben von Insekten, und Verfahren zur Herstellung einer solchen Vorrichtung**

(30) Priorität: 26.09.2003 DE 10345101
(71) Anmelder: Rothen, Josef, 42699 Solingen (DE); Ay, Cetin, 42699 Solingen (DE)
(72) Erfinder: Rothen, Josef, 42699 Solingen (DE); Ay, Cetin, 42699 Solingen (DE)
(74) Vertreter: Schumacher, Horst, Dr. Dipl.-Phys.

(57) **Zusammenfassung**

Ein elektrischer Insektentöter umfasst einen isolierenden Rahmen (10), in welchem zwei Gruppen von einander parallelen Leitern (2,3) freiliegend aufgespannt sind, wobei die Leiter einer Gruppe in einem die Abmessungen eines zu tötenden Insekts unterschreitenden Querabstand (8) zu den Leitern (3,2) zu der anderen Gruppe verlaufen und wobei die Leiter (2 bzw. 3) jeweils einer Gruppe an den einander benachbarten Enden eine gemeinsame Zuleitung (4 bzw. 5) aufweisen und eine Einrichtung (13), mittels derer die beiden Gruppen von Leitern (2,3) auf unterschiedliche elektrische Potentiale bringbar sind. Der Insektentöter (100) umfasst ein Leitergebilde, bei dem die Leiter (2,3) einer Gruppe mit der zugehörigen Zuleitung (4 bzw. 5) ein einstückiges Formteil bilden.

## Beschreibung

Die Erfindung betrifft eine Vorrichtung zum Töten und/oder Betäuben von Insekten und ein Verfahren zur Herstellung einer solchen Vorrichtung, wobei die Vorrichtung einen isolierenden Rahmen, zwei Gruppen von im bestimmungsgemäßen Montagezustand zueinander parallel etwa in einer Ebene verlaufenden, langgestreckten dünnen, elektrisch leitenden Leitern und eine Einrichtung, mittels derer die beiden Gruppen von Leitern auf unterschiedliche elektrische Potentiale bringbar sind, umfaßt, wobei die Leiter jeder Gruppe von jeweils einer Zuleitung kammzinkenartig abzweigen und wobei die Zuleitung der einen Gruppe der Zuleitung der anderen Gruppe gegenüberliegt und die Leiter der Gruppe in besagter im wesentlichen einzigen Ebene zwischen die Leiter der anderen Gruppe eingreifen, ohne daß es zu einem elektrischen Kontakt zwischen den Leitern kommt. Schließlich betrifft die Erfindung auch eine Form zur Herstellung eines wesentlichen Bauteils der Vorrichtung.

Solche Vorrichtungen sind bekannt, z.B. aus der US 5,519,963. Sie werden gemeinhin als elektrische Insektentöter bezeichnet, obwohl sie, je nach Art und Größe des Insekts und der an die beiden Gruppen von Leitern angelegten Spannungen und die verwendeten Stromstärken ein Insekt vorteilhaft nicht unbedingt töten, sondern nur betäuben. Gleichwohl wird im nachfolgenden meist nur kurz von "Insektentöter" gesprochen, ohne daß darin eine Beschränkung zu sehen ist.

Elektrische Insektentöter erinnern zwar von ihrer Form her an klassische Fliegenklatschen oder verkleinerte Schläger für Ballspiele wie Badminton, basieren jedoch auf der Grundidee, zwei Gruppen von langgestreckten, dünnen Leitern, die auf unterschiedlichen elektrischen Potentialen liegen, derart in einer "Schlagfläche" anzuordnen, daß ein Insekt wie z.B. eine Fliege, nicht durch Schlagfläche hindurchfliegen kann, ohne jeweils wenigstens einen Leiter der beiden Gruppen zu berühren, so daß es die beiden Gruppen kurzschließt und es durch den durch es hindurchfließenden Strom getötet oder zumindest betäubt wird.

Eine solche Art des Fangens bzw. Tötens von Insekten hat gegenüber dem einfachen Totschlagen den großen Vorteil, daß das Insekt, wenn die Spannung und/oder Stromstärke entsprechend gewählt wird, im ganzen getötet wird, ohne daß Blutflecken entstehen und/oder Teile des Insektenkörpers z.B. von einer Wand oder einem Tisch entfernt werden müssen. Zudem ist es mit solchen elektrischen Insektentötern relativ leicht möglich, Insekten auch im Flug zu fangen.

Schon aus hygienischen Gründen sind daher elektrische Insektentöter herkömmlichen Fliegenklatschen vorzuziehen. Allerdings sind die bekannten elektrischen Insektentöter in der Herstellung relativ aufwendig und damit teuer. In der Regel müssen nämlich die Leiter einzeln miteinander verlötet werden. Bei der eingangs genannten US 5,519,963 werden die Leiter in Form von Leiterbahnen auf den im bestimmungsgemäßen Montagezustand innenliegenden Seitenflächen zweier einander gegenüberliegender Gitter aus elektrisch isolierendem Material angeordnet. Weitere elektrische Insektentöter sind z.B. aus CH 127 726, GB 990 897, US 1,962,420 und US 2,881,554 bekannt.

Davon ausgehend liegt der Erfindung die Aufgabe zugrunde, einen Insektentöter der eingangs genannten Art anzugeben, der bei hoher Funktionalität und Zuverlässigkeit einfach herzustellen ist. Des weiteren liegt der Erfindung die Aufgabe zugrunde, ein Verfahren zur Herstellung des Insektentöters anzugeben, das in besonders wirtschaftlicher Weise durchzuführen ist. Schließlich liegt der Erfindung die Aufgabe zugrunde, eine Form zur Herstellung eines für die erfindungsgemäße Vorrichtung wesentlichen Bauteils anzugeben, das die Durchführung des erfindungsgemäßen Verfahrens zur Herstellung der Vorrichtung erlaubt.

Die erstgenannte Aufgabe wird von einer Vorrichtung gemäß Anspruch 1 gelöst. Vorteilhafte Ausgestaltungen und Weiterbildungen sind Gegenstand der Unteransprüche. Die nebengeordneten Ansprüche 25, 28 und 33 betreffen Verfahren zur Herstellung eines Insektentöters bzw. eine Form zur Herstellung eines wesentlichen Bauteils der Vorrichtung.

Durch die Ausbildung der Leiter einer Gruppe mit ihrer Zuleitung als einstückiges Formteil entfallen alle Arbeitsvorgänge, die mit der Herstellung von Einzelverbindungen der Leiter mit ihrer Zuleitung einhergingen. Mit dem Wort "einstückig" ist gemeint, daß die Leiter mit ihren Zuleitungen in einem Stück geformt sind, d.h. nicht nachträglich durch Löten oder dergleichen zu einem Stück verbunden werden. Löt- oder sonstige Vorgänge zur Verbindung der Leiter mit ihren Zuleitungen können auf diese Weise eingespart werden. Die Leiter mit ihren Zuleitungen können auf diese Weise in einem Schritt bereitgestellt werden, was die Fertigung erheblich verbilligt.

Dabei sei an dieser Stelle betont, daß wenn hier stets von "zwei Gruppen" von Leitern gesprochen wird, damit zum Ausdruck gebracht werden soll, daß wenigstens zwei Gruppen von Leitern, an die unterschiedliche elektrische Spannungen anlegbar sein müssen, vorgesehen sein müssen, um einen Stromschlag in der gewünschten Weise erzeugen zu können. Es ist selbstverständlich auch möglich, drei, vier oder mehr "Gruppen" von Leitern vorzusehen, ohne den Erfindungsgedanken zu verlassen. In solchen Fällen wird man zweckmäßigerweise auch nur zwei unterschiedliche Potentiale vorsehen, so daß als eine "Gruppe" von Leitern solche Leiter verstanden werden können, die bei Benutzer des Insektentöters auf demselben Potential liegen.

Bei einer bevorzugten Ausführungsform besitzen die Leiter an ihren freien Enden jeweils eine Verdickung. Solche Verdickungen können vorteilhaft zur Verankerung der Leiter in einem entsprechenden Rahmen dienen.

Die Leiter können in dem Rahmen so aufgespannt sein, daß sie zumindest partiell frei liegen und daher eine große Wahrscheinlichkeit besteht, daß ein Insekt beim Hindurchtreten die Leiter in der gewünschten Weise berührt. Die (mechanische) Spannung der Leiter in dem Rahmen bewirkt, daß es auch bei heftigen Bewegungen mit dem Insektentöter nicht dazu kommt, daß sich benachbarte Leiter berühren, wodurch es zu einem ungewünschten Kurzschluß käme.

Die Herstellung eines erfindungsgemäßen Insektentöters gestaltet sich besonders einfach, wenn in dem Rahmen Aufnahmen für die Verdickungen und vorzugsweise auch für die Zuleitungen gebildet sind und ein zweiteilig ausgebildeter, aus zwei zueinander zumindest partiell komplementären Rahmenteilen bestehender Rahmen verwendet wird. Dann können die Leiter nebst ihren Zuleitungen einfach in eines der Rahmenteile eingelegt werden, worauf das zweite Rahmenteil aufgesetzt und mit dem ersten Rahmenteil verbunden wird. Bei einer bevorzugten Ausführungsform weisen die Rahmenteile dazu Rastmittel auf, mittels welcher sie miteinander verrastbar sind.

Bei einer besonders bevorzugten Ausführungsform sind die Leiter jeder Gruppe mit den Leitern der anderen Gruppen und ihren Zuleitungen aus einem einzigen gemeinsamen Formteil gebildet. Dies hat den großen Vorteil, daß bis zur Endmontage bezüglich der Leiter und ihrer Zuleitungen nur ein einziges Formteil gehandhabt werden muß, das zudem über eine größere Stabilität verfügt. Besonders günstig wirkt sich diese Einteiligkeit des Formteils beim Parallel-Halten beider Gruppen von Leitern aus. Im Regelfall wird die Ausgestaltung dieses Formteils so gewählt werden, daß die Zuleitungen quasi eine Art umlaufenden Rahmen bilden, innerhalb dessen sich die Leiter parallel zueinander erstrecken, so daß es keine freien Enden der Leiter gibt und diese bei der weiteren Verarbeitung weder verbiegen, noch abbrechen können. Bevorzugt wird dann ein zweiteiliger Rahmen verwendet, dessen beide Rahmenteile über Mittel zum Trennen des Formteils in die Gruppen von Leitern und ihre Zuleitungen verfügt.

Die letztgenannten Mittel zum Trennen des Formteils können vorteilhaft aus Erhöhungen und dazu zumindest partiell komplementären Vertiefungen bestehen, wobei die Vertiefungen derart ausgebildet sein können, daß sie jeweils ein abgeschertes Stück des Formteils aufnehmen können. Dies hat dann den großen Vorteil, daß das Formteil einfach zwischen zwei entsprechend ausgebildete Rahmenteile gelegt werden muß, bei deren Zusammendrücken die beiden Gruppen von Leitern zuverlässig voneinander getrennt werden und wobei keine Trennabfälle zurückbleiben, da dieser im Rahmen verbleiben.

Die Leiter und die jeweiligen Zuleitungen können vorteilhaft aus einem zumindest an der Oberfläche elektrisch leitenden Kunststoffmaterial bestehen. Dabei kann es sich um ein mit einer leitenden Komponente versehenes Kunststoffmaterial handeln, wobei als elektrisch leitende Komponenten z.B. Metallfasern oder pulverförmiges oder feinkörnige elektrisch leitende Materialien, wie insbesondere Metallpulver oder Graphit, in Frage kommen.

Alternativ ist es auch möglich, jedoch herstellungstechnisch aufwendiger die Leiter und ihre Zuleitungen elektrisch leitend zu beschichten.

Bei einer bevorzugten Ausführungsform sind die Leiter und ihre Zuleitungen Kunststoffspritzteile. Alternativ kann es sich bei den Leiter und ihren Zuleitungen auch um Metallteile, z.B. Metall-Spritzgußteile oder Blech-Stanzteile handeln.

Zur Erzeugung der Potentialdifferenz zwischen den beiden Gruppen von Leitern kann eine batteriebetriebene elektrische Hochspannungsquelle vorgesehen sein, deren Pole direkt oder indirekt mit je einer der Zuleitungen verbunden sind.

Vorteilhaft können Mittel zum Einstellen wenigstens zweier unterschiedlicher Stromstärken und/oder unterschiedlicher elektrischer Spannungen, die bei Benutzung der Vorrichtung durch die Gruppen von Leitern fließen können, vorgesehen sein. Dies ermöglicht es dem Benutzer der Vorrichtung zwischen z.B. einem Betäubungsmodus und einem Tötungsmodus umzuschalten. Soll z.B. eine Biene oder ein anderes nützliches Insekt lediglich aus einem Zimmer entfernt werden, so kann ihm mit der Vorrichtung ein entsprechend starker, jedoch nicht tödlicher Stromschlag verpaßt werden, so daß das Insekt betäubt ist und aus dem Zimmer ins Feie gebracht werden kann. Auch ist mit solchen Mitteln eine Ausgestaltung der Vorrichtung möglich, die es dem Benutzer erlaubt, die Stromstärke und/oder die Spannung an landestypische Insekten anzupassen. So gibt es in vielen südlichen Ländern Insekten, die deutlich größer sind als typische Insekten in nordischen Ländern und zu deren Tötung entsprechend höhere Stromstärken und/oder elektrische Spannungen eingesetzt werden müssen, die aber für kleinere Insekten viel zu hoch wären und den ungewünschten Effekt hätten, daß ein kleines Insekt bei Berührung der Leiter quasi explodierte und sich Insektenreste unkontrolliert im Raum verbreiteten, während eigentlich gewollt ist, das Insekt im ganzen zu töten.

Die Leiter können mit einer elektrisch leitenden Antihaft-Beschichtung versehen sein oder aus einem elektrisch leitenden Material mit Eigenschaften eines Antihaftmaterials bestehen, was die Reinigung und Sauberhaltung der Vorrichtung begünstigte.

Neben der Vorrichtung schlägt die Erfindung eine Form zur Herstellung eines Formteils. welches eine Gruppe von zueinander parallel in einer Ebene verlaufenden, langgestreckten dünnen Leitern, die von einer Zuleitung kammzinkenartig abzweigen für eine der vorstehend genannten, erfindungsgemäßen Vorrichtungen vor. Vorzugsweise ist die Form dabei derart ausgebildet ist, daß die Leiter an ihren freien Enden eine Verdickung besitzen. Weiter bevorzugt ist die Form derart ausgebildet, daß mit ihr ein einstückiges Formteil herstellbar ist, welches zwei Gruppen von Leitern umfaßt, die jeweils von einer Zuleitung kammzinkenartig abzweigen, wobei die Zuleitung einer Gruppe der Zuleitung der anderen Gruppe gegenüberliegt und alle Leiter in einer Ebene parallel zueinander verlaufen und die der jeweiligen Zuleitung abgewandten Endbereiche der Leiter über jeweils eine Sollbruchstelle mit der anderen Zuleitung verbunden sind.

Das erfindungsgemäße Verfahren zur Herstellung einer Vorrichtung zum Töten und/oder Betäuben von Insekten, wobei die Vorrichtung einen isolierenden Rahmen, zwei Gruppen von im bestimmungsgemäßen Montagezustand zueinander parallel in einer Ebene verlaufenden, langgestreckten dünnen Leitern und eine Einrichtung, mittels derer die beiden Gruppen von Leitern auf unterschiedliche elektrische Potentiale bringbar sind, umfaßt und wobei die Leiter jeder Gruppe von jeweils einer Zuleitung kammzinkenartig abzweigen und wobei die Zuleitung einer Gruppe der Zuleitung der anderen Gruppe gegenüberliegt und die Leiter der einen Gruppe in besagter Ebene zwischen die Leiter der anderen Gruppe eingreifen, ohne daß es zu einem elektrischen Kontakt zwischen den Leitern kommt, sieht vor, daß wenigstens ein einstückiges Formteil verwendet wird, daß sowohl die Leiter einer Gruppe als auch deren Zuleitung darstellt, wobei die Leiter an ihren freien Enden jeweils eine Verdickung besitzen, und daß das Formteil in einen Rahmen eingelegt wird, in welchem Aufnahmen für die Verdickungen gebildet sind.

Bei einer bevorzugten Durchform dieses Verfahrens wird ein zweiteilig ausgebildeter Rahmen verwendet, der aus zwei zueinander zumindest partiell komplementären Rahmenteilen besteht. Bei entsprechender Ausbildung der Rahmenteile können die Rahmenteile nach dem Einlegen des oder der Formteils/Formteile miteinander verrastet werden.

Eine besonders einfache Variante des Verfahrens sieht vor, daß ein einziges Formteil verwendet wird, das sowohl die Leiter jeder Gruppe als auch die Zuleitungen bildet. Dieses kann dann erst kurz vor Fertigstellung der Vorrichtung in zwei Gruppen von Leitern mit entsprechenden Zuleitungen getrennt werden. Bevorzugt wird dazu das Formteil, das sowohl die Leiter jeder Gruppe als auch die Zuleitungen bildet, in eines der Rahmenteile eingelegt wird und das andere Formteil auf das Rahmenteil aufdrückt, wobei jede Gruppe von Leitern und die entsprechende Zuleitung von der anderen Gruppe von Leitern und der entsprechenden Zuleitung getrennt wird.

Alternativ kann bei der Herstellung eines erfindungsgemäßen Insektentöters auch so vorgegangen werden, daß zwar wiederum wenigstens ein einstückiges Formteil verwendet wird, daß sowohl die Leiter einer Gruppe als auch deren Zuleitung darstellt, wobei die Leiter an ihren freien Enden jeweils eine Verdickung besitzen, daß dann aber das Formteil zumindest partiell mit einem nichtleitenden Kunststoff derart umspritzt wird, daß der isolierende Rahmen gebildet wird.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so daß die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen sowie aus der nachfolgenden Beschreibung der zugehörigen Zeichnung, in der - beispielhaft - ein bevorzugtes Ausführungsbeispiel der erfindungsgemäßen Anordnung einer Vorrichtung zum Töten und/oder Betäuben von Insekten, eines Verfahrens zur Herstellung einer solchen Vorrichtung sowie einer Form zur Herstellung eines wesentlichen Bauteils der Vorrichtung dargestellt ist. In der Zeichnung zeigen:
- Fig. 1: eine Ansicht eines erfindungsgemäßen Insektentöters zeigt;
- Fig. 2: den in Fig. 1 mit A bezeichneten Ausschnitt in vergrößertem Maßstab, im Schnitt etwa entlang der Linie II in Fig. 3 zeigt, und zwar bei zwei unterschiedlichen Ausführungsvarianten;
- Fig. 3: einen Schnitt entlang der Linie III-III in Fig. 2 zeigt;
- Fig. 4: eine Draufsicht auf eine weitere alternative Ausführungsform eines Formteils, bei dem zwei Gruppen von Leitern und ihre entsprechenden Zuleitungen in einem gemeinsamen Stück gebildet sind, wobei die beiden Gruppen natürlich zur Fertigstellung des Insektentöters voneinander elektrisch getrennt werden müssen;
- Fig. 5A/B: eine Schnittansicht (Schnitt entlang der Linie V - V entsprechend Fig. 4) durch das obere und untere Rahmenteil eines zweiteiligen Rahmen mit dazwischen plaziertem Formteil gemäß Fig. 4 im vergrößerten Detailausschnitt in zwei Stadien der Herstellung vor und nach Zusammenfügen des Rahmens;
- Fig. 6: eine Draufsicht auf zwei einander gegenüberliegende Abschnitte eines unteren Rahmenteils gemäß Fig. 5A, 5B;
- Fig. 7A: eine Schnittansicht auf Mittel zum Anschließen der Zuleitungen an eine Einrichtung, mittels derer die beiden Gruppen von Leitern auf unterschiedliche elektrische Potentiale bringbar sind und
- Fig. 7B: eine Draufsicht auf die Mittel gemäß Fig. 7A einschließlich einer rein schematischen Darstellung der Einrichtung, mittels derer die beiden Gruppen von Leitern auf unterschiedliche elektrische Potentiale bringbar sind.

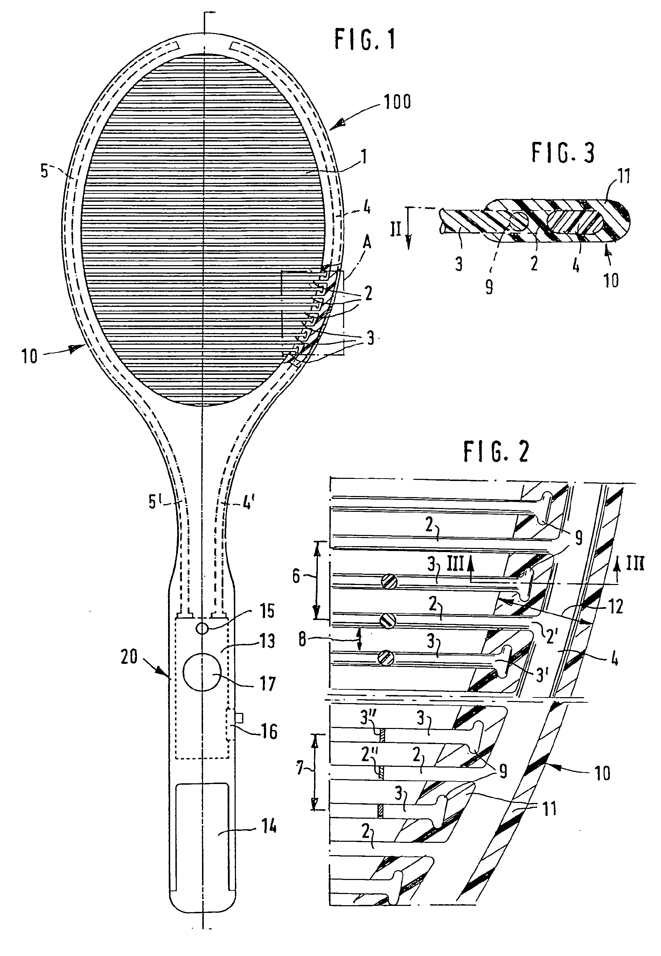

Der in Fig. 1 in seiner Gesamtheit mit 100 bezeichnete Insektentöter umfaßt ein ovales Feld 1, welches in der aus Fig. 1 ersichtlichen Weise von zueinander parallelen, geraden linien- oder stäbchenförmigen Leitern 2, 3 durchsetzt ist, die zumindest an ihren Oberflächen elektrisch leitend ausgebildet sind.

Die Leiter 2, 3 bilden zwei Gruppen. Wie in Fig. 2 zu erkennen, sind die Leiter 2 mit ihren Anschlußenden 2' mit einer allen Leitern 2 gemeinsamen Zuleitung 4 einstückig verbunden, die gemäß Fig. 1 auf der rechten Seite des Feldes 1 verläuft.

Die zweite Gruppe der Leiter 3 ist mit ihren nicht gezeigten Anschlußenden mit einer entsprechenden gemeinsamen Zuleitung 5 verbunden, die sich gemäß Fig. 1 auf der linken Seite des Feldes 1 erstreckt. Die Zuleitungen 4, 5 sind voneinander getrennt und haben keinen elektrischen Kontakt miteinander.

Der Querabstand 6 zwischen je zwei einander benachbarten Leitern 2 ist bei allen Leitern 2 konstant und gleich dem Querabstand 7 zwischen je zwei einander benachbarten Leitern 3 der zweiten Gruppe.

Die Leiter 2 der ersten Gruppe erstrecken sich von der in der Zeichnung rechten Zuleitung 4 kammzinkenartig nach links, ohne auf der gegenüberliegenden Seite mit der Zuleitung 5 in Berührung zu kommen. Dasselbe gilt für die von der linken Zuleitung 5 kammzinkenartig nach rechts vorstehenden Leiter 3, die mit der Zuleitung 4 nicht in Berührung kommen.

Im bestimmungsgemäßen Montagezustand verläuft in der Draufsicht jeweils ein Leiter 3 ungefähr oder genau in der Mitte zwischen zwei Leitern 2 und umgekehrt. Alle Leiter 2, 3 verlaufen in einer gemeinsamen Ebene, so daß sich ein insgesamt ebenes Leiterfeld 1 ergibt, bei dem zwischen je zwei benachbarten Leitern 2, 3 ein lichter Abstand 8 besteht, der bei diesem Ausführungsbeispiel etwa 4 mm beträgt und sich nach der Größe der üblicherweise zu tötenden Insekten bemißt. Solche Insekten sind z.B. Fliegen oder Mücken, die bei einer geeigneten Bemessung des Abstandes 8 nicht durch das Feld 1 der Leiter 2, 3 hindurchfliegen können sondern mit zwei benachbarten Leitern in Berührung kommen und auf diese Weise einen tödlichen Stromschlag erhalten.

Obwohl der Insektentöter 100 aussieht wie ein Schläger, werden die Insekten nicht erschlagen, sondern durch einen Stromschlag getötet oder betäubt, wobei sie nach dem Stromschlag von den Leitern 2, 3 abfallen ohne eine Verschmutzung zu hinterlassen.

Obwohl die Insekten nicht erschlagen werden sollen und die Leiter 2, 3 bei der Handhabung des Insektentöters 100 keine wesentliche mechanische Beanspruchung erfahren, empfiehlt es sich, an den freien Enden 2' der Leiter 2, 3, die frei von ihrer jeweiligen Zuleitung 4, 5 aus auf die andere Seite vorkragen, eine Verdickung 9 vorzusehen, die der Verankerung in dem noch zu beschreibenden Rahmen 10 dienen.

Die Leiter 2, 3 haben eine elektrisch leitende Oberfläche, damit es bei der Berührung zweier benachbarter Leiter 2, 3 durch ein Insekt zu einem Stromfluß kommen kann. Derartige Leiter können dadurch hergestellt werden, daß jeweils eine Gruppe von Leitern 2 oder 3 zusammen mit der zugehörigen Zuleitung 4, 5 als einstückige Formteile aus Kunststoff gespritzt werden, der zumindest an ihrer Oberfläche elektrisch leitend ist. Dies kann dadurch erzielt werden, daß ein Kunststoff verwendet wird, der eine elektrisch leitende Komponente wie feine Metallfasern, Graphit oder dergleichen besitzt. Alternativ können auch nichtleitende Kunststoffe zur Herstellung der Leiter und ihrer Zuleitungen verwendet werden, wenn diese anschließend elektrisch leitend beschichtet werden.

In der Fig. 2 sind zwei Ausführungsvarianten dargestellt: In der oberen Hälfte der Fig. 2 ist eine Variante gezeigt, bei der die Leiter 2, 3 aus Kunststoff bestehen. Es handelt sich hierbei um die nach heutigem Kenntnisstand beste Ausführungsform der Erfindung. Die Leiter 2, 3 haben hier einen etwa kreisförmigen Querschnitt, was aber nicht zwingend ist. Auch ovale oder rechteckige Querschnittsformen kommen in Betracht. In der unteren Hälfte der Fig. 2 ist eine alternative Ausführungsform dargestellt, bei der die Leiter 2, 3 mit ihren zugehörigen Zuleitungen 4, 5 jeweils durch ein einstückiges Blech-Stanzteil gebildet sind. Dies ist durch die flach-rechteckigen Querschnitte 2", 3" angedeutet. Auch bei dieser Ausführungsform können die freien Enden der Leiter 2, 3 Verdickungen oder Vorsprünge 9 zur Verankerung im Rahmen 10 aufweisen.

Die Fig. 3 zeigt eine Ausführungsform, bei der die Zuleitungen 4 und 5 und die Anschlußbereiche der Leiter 2, 3 mit einem nicht leitfähigen Kunststoff 11 derart umspritzt sind, daß sich ein strang- oder streifenförmig rund um das Feld 1 herumlaufender Rahmen 10 ergibt. Die Dicke 12 des Rahmens 10 in der Ebene des Feldes 1 (Fig. 2) richtet sich nach den Stabilitätserfordernissen und kann etwa im Bereich von 10 bis 20 mm liegen.

An dem Rahmen 10 ist ein Handgriff 20 vorgesehen, der bei diesem Ausführungsbeispiel eine erste Kammer zur Aufnahme einer Hochspannungsquelle 13 aufweist. Die Hochspannungsquelle bezieht ihre Energie aus Batterien, die in einem Batteriefach 14 untergebracht sind. Die Hochspannungsquelle 13 kann beispielsweise einen Zerhacker umfassen, der einen Kondensator auflädt, an dessen beiden Polen die Enden 4', 5' der Zuleitungen 4, 5 angeschlossen sind, so daß die Leiter 2, 3 einen Gleichspannungsunterschied von mehreren Kilovolt aufweisen, der zum Töten der Insekten ausreicht. 15 ist eine Kontrollampe, die anzeigt, wenn der Insektentöter bereit, also die Hochspannung aufgebaut ist. 16 ist ein Schalter zum Inbetriebsetzen des Zerhackers, und 17 ist ein Schalter mittels dessen die Verbindung des aufgeladenen Kondensators zu den Enden 4' und 5' der Zuleitungen 4 und 5 herstellbar ist.

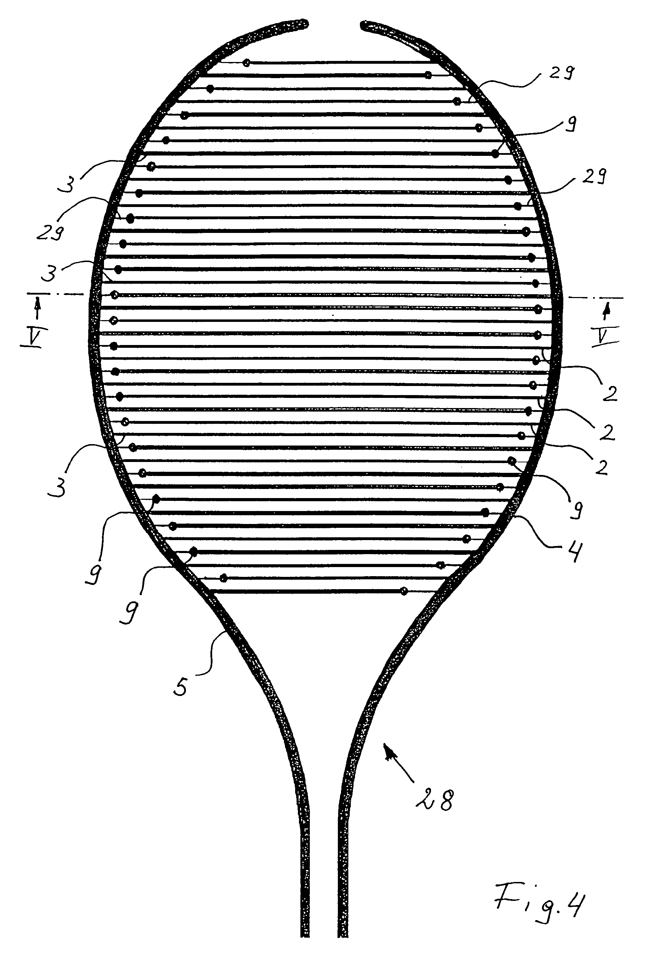

In der Fig. 4 ist eine Draufsicht auf ein in seiner Gesamtheit mit 28 bezeichnetes Formteil gezeigt, bei dem zwei Gruppen von Leitern 2, 3 und ihre entsprechenden Zuleitungen 4, 5 in einem einzigen, gemeinsamen Stück z.B. in einem Kunststoff-Spritzgußverfahren gebildet sind. Ein solches Formteil stellt die nach heutigem Kenntnisstand beste Ausführungsform zur ökonomischen Herstellung der für einen erfindungsgemäßen Insektentöter benötigten Leiter und Zuleitungen dar, wobei die beiden Gruppen von Leitern und ihre entsprechenden Zuleitungen natürlich zur Fertigstellung des Insektentöters noch voneinander derart getrennt werden müssen, daß zwischen ihnen keine elektrische leitende Verbindung besteht. Dieser Vorgang wird im weiteren noch beschrieben werden.

Die Leiter 2 und 3 weisen in ihren Endbereichen, die später die "freien" Enden bilden, Verdickungen 9 auf, die bei diesem Ausführungsbeispiel kugelförmig ausgebildet sind. Zwischen den Verdickungen 9 einer Gruppe von Leitern und der Zuleitung der jeweils anderen Gruppe von Leitern besteht nach dem Herstellen, also insbesondere dem Spritzgießen des Formteils 28, noch eine Verbindung in Form dünner Verbindungsstege 29, die gewissermaßen Sollbruchstellen bilden und in deren Bereich die beiden Gruppen später voneinander getrennt werden. Zunächst bewirken die Verbindungsstege aber vorteilhaft, daß nur ein einziges Teil gehandhabt werden muß, um später sowohl sämtliche Leiter 2, 3 als auch die Zuleitungen 4, 5 zu bilden.

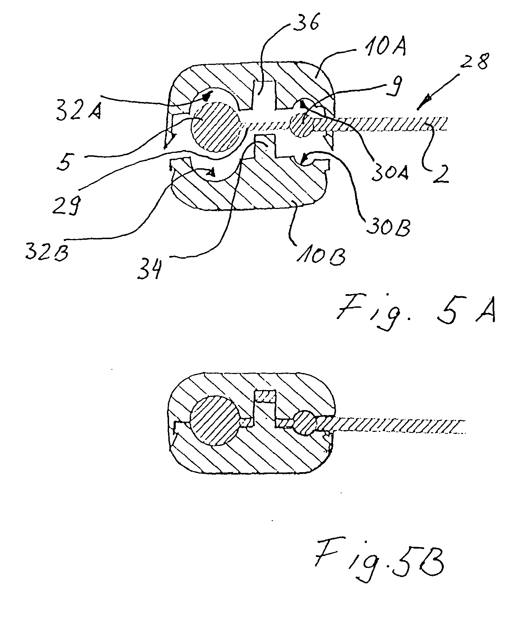

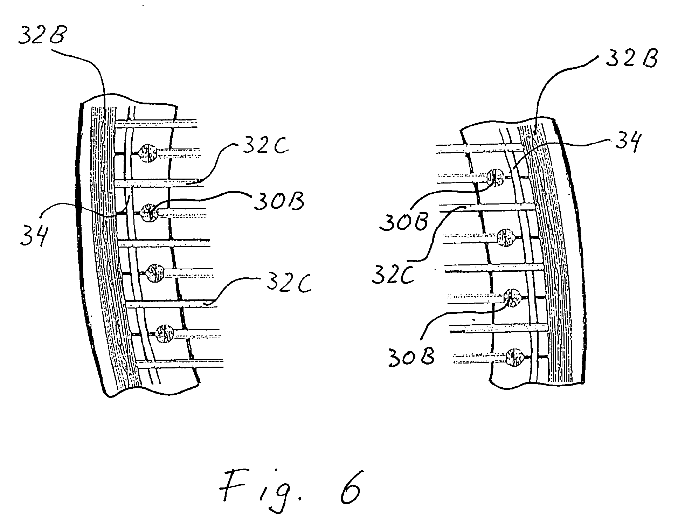

Dabei sei an dieser Stelle betont, daß die der jeweiligen Zuleitung gegenüberliegenden Enden der Leiter 2, 3 bei Verwendung eines Formteils wie in Fig. 4 gezeigt und eines Rahmens wie in Fig. 5A, 5B und Fig. 6 gezeigt vorteilhaft niemals wirklich "freie" Enden sind (die leicht zum Verbiegen oder Abbrechen der Leiter führen könnten), sondern zunächst über die Verbindungsstege 29 mit der Zuleitung der anderen Gruppe von Leitern verbunden und später, wenn diese Verbindung gelöst ist, über die Verdickung 9 im Rahmen eingespannt sind. "Freie" Enden sind also im elektrischen Sinne beim fertigen Insektentöter zu verstehen.

Die Fig. 5A, 5B zeigen Schnitte durch einen zweiteiligen Rahmen, der aus einem in der Zeichnung oberen Rahmenteil 10A und einem in der Zeichnung unteren Rahmenteil 10B besteht. In der in Fig. 5A, 5B dargestellten Situation ist zwischen diese Rahmenteile ein Formteil 28 gemäß Fig. 4 eingelegt, von dem hier ein Leiter 2 mit Verdickung 9, Verbindungssteg 29 und Zuleitung 5 zu sehen ist.

Das obere Rahmenteil 10A verfügt bei diesem Ausführungsbeispiel über Aufnahmen 30A für die Verdickung 9 und 32A für die Zuleitungen 4 und 5 des Formteils 28. Entsprechende Aufnahmen 30B und 32B sind im unteren Rahmenteil 10B vorgesehen. Sie können auch dazu genutzt werden, über die Verdickungen 9 eine gewisse Zugspannung auf die Leiter 2, 3 auszuüben.

Die Rahmenteile verfügen über Mittel zum Trennen des beide Gruppen von Leiter und ihre Zuleitungen bildenden Formteils 28 in die Gruppen von Leitern und ihre Zuleitungen, und zwar in Form von am unteren Rahmenteil 10B vorgesehen Erhöhungen 34 und dazu zumindest partiell komplementären Vertiefungen 36 am oberen Rahmenteil 10A.

Dabei sind die Vertiefungen 36 derart ausgebildet, daß sie jeweils ein abgeschertes Stück des Formteils aufnehmen können. Drückte man die in Fig. 5A gezeigten Rahmenteile 10A und 10B zusammen, so scheren die oberen Ecken der Erhöhung 34 das zwischen der Vertiefung 36 und der Erhöhung 34 gelegene Stück des Verbindungssteges 29 ab. Das abgescherte Stück findet - wie in Fig. 5B ersichtlich - Aufnahme in der Vertiefung 36, und der Leiter 2 ist von der Zuleitung 5, die eigentlich zum Versorgen der Leiter 3 dient, in der gewünschten Weise elektrisch getrennt. Gleichzeitig ist die Verdikkung 9 sicher in den Aufnahmen 30A und 30B gehalten, während die Zuleitung 5 in den Aufnahmen 32A und 32B geführt ist. Da entsprechendes mit den anderen Verdickungen und der anderen Zuleitung passierte, sind die Leiter fest in dem aus den beiden Rahmteilen 10A und 10B gebildeten Rahmen eingespannt. Wenn die Rahmenteile über wie in Fig. 5A und 5B gezeigte Rastmittel verfügen, kann auf weitere Befestigungsmittel zur Bildung der aus den beiden Rahmenteilen und den Leitern und ihren Zuleitungen bestehenden Einheit verzichtet werden.

In der Fig. 6 ist eine Draufsicht auf zwei einander gegenüberliegende Abschnitte eines unteren Rahmenteils 10B gemäß Fig. 5A, 5B gezeigt. Deutlich zu erkennen sind die Aufnahmen 30B für die Verdickungen der Leiter und die Aufnahmen 32B für die Zuleitungen. Zudem erkennt man noch die Auslässe 32C für die von den Zuleitungen abzweigenden Leiter sowie die Erhöhungen 34, die zusätzlich auch als Rastmittel dienen können.

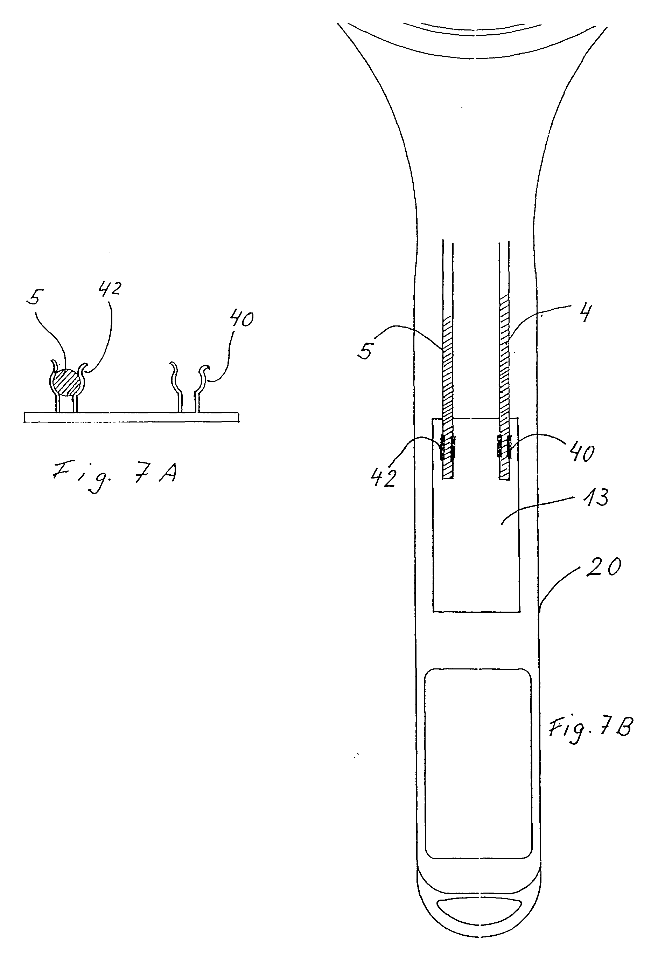

In den Fig. 7A und 7B sind Mittel in Form von Klemmen 40 und 42 zum Anschließen der Zuleitungen an eine oben bereits beschriebene Einrichtung, mittels derer die beiden Gruppen von Leitern auf unterschiedliche elektrische Potentiale bringbar sind, gezeigt. In der Fig. 7A ist zur Verdeutlichung der Funktionsweise rein beispielhaft in die Klemme 42 bereits die Zuleitung 5 eingedrückt, während die Klemme 40 noch leer ist. In der in Fig. 7B gezeigten Situation ist auch die Zuleitung 4 in die ihr zugeordnete Klemme 40 eingedrückt, so daß beide Zuleitungen mit der hier nur rein schematisch dargestellten Einrichtung, mittels derer die beiden Gruppen von Leitern auf unterschiedliche elektrische Potentiale bringbar sind, angeschlossen sind, und zwar in besonders einfacher und schnell zu montierender Weise.

## Patentansprüche

1. Vorrichtung zum Töten und/oder Betäuben von Insekten umfassend
- einen isolierenden Rahmen (10),
- zwei Gruppen von im bestimmungsgemäßen Montagezustand zueinander parallel etwa in einer Ebene verlaufenden, langgestreckten dünnen Leitern (2, 3) und
- eine Einrichtung (13), mittels derer die beiden Gruppen von Leitern (2, 3) auf unterschiedliche elektrische Potentiale bringbar sind,
- wobei die Leiter jeder Gruppe von jeweils einer Zuleitung (4, 5) kammzinkenartig abzweigen und
- wobei die Zuleitung (4) einer Gruppe der Zuleitung (5) der anderen Gruppe gegenüberliegt und die Leiter (2) der einen Gruppe in besagter etwa einen Ebene zwischen die Leiter (3) der anderen Gruppe eingreifen, ohne daß es zu einem elektrischen Kontakt zwischen den Leitern kommt,
**dadurch gekennzeichnet,**
- **daß** die Leiter (2, 3) jeder Gruppe mit ihrer Zuleitung (4, 5) ein einstückiges Formteil bilden.

2. Vorrichtung nach Anspruch 1, **dadurch gekennzeichnet, daß** die Leiter (2, 3) an ihren freien Enden (2') eine Verdickung (9) besitzen.

3. Vorrichtung nach Anspruch 1 oder 2, **dadurch gekennzeichnet, daß** die Leiter in dem Rahmen (10) derart aufgespannt sind, daß sie zumindest partiell frei liegen.

4. Vorrichtung nach Anspruch 2 und 3, **dadurch gekennzeichnet, daß** in dem Rahmen (10) Aufnahmen (30A, 30B) für die Verdickungen (9) gebildet sind.

5. Vorrichtung nach einem der Ansprüche 1 bis 4, **dadurch gekennzeichnet, daß** in dem Rahmen (10) Aufnahmen (32A, 32B) für die Zuleitungen (4, 5) gebildet sind.

6. Vorrichtung nach einem der Ansprüche 1 bis 5, **dadurch gekennzeichnet, daß** der Rahmen (10) zweiteilig ausgebildet ist und aus zwei zueinander zumindest partiell komplementären Rahmenteilen (10A, 10B) besteht.

7. Vorrichtung nach Anspruch 6, **dadurch gekennzeichnet, daß** die Rahmenteile (10A, 10B) über Rastmittel verfügen, mittels welcher sie im bestimmungsgemäßen Montagezustand miteinander verrastbar sind.

8. Vorrichtung nach einem der Ansprüche 1 bis 7, **dadurch gekennzeichnet, daß** die Leiter jeder Gruppe mit den Leitern der anderen Gruppe und ihren Zuleitungen (4, 5) zumindest im noch nicht verbauten Zustand aus einem einzigen gemeinsamen Formteil (28) gebildet sind.

9. Vorrichtung nach Anspruch 8, **dadurch gekennzeichnet, daß** in den Rahmenteilen (10A, 10B) Mittel (34, 36) zum Trennen des beide Gruppen von Leiter und ihre Zuleitungen bildenden Formteils (28) in die Gruppen von Leitern und ihre Zuleitungen vorgesehen sind.

10. Vorrichtung nach Anspruch 9, **dadurch gekennzeichnet, daß** Mittel zum Trennen des Formteils (28) aus Erhöhungen (34) und dazu zumindest partiell komplementären Vertiefungen (36) besteht, wobei die Vertiefungen derart ausgebildet sind, daß sie jeweils ein abgeschertes Stück des Formteils aufnehmen können.

11. Vorrichtung nach einem der Ansprüche 1 bis 10, **dadurch gekennzeichnet, daß** die Leiter (2, 3) und die jeweiligen Zuleitungen (4, 5) aus einem zumindest an der Oberfläche elektrisch leitenden Kunststoffmaterial bestehen.

12. Vorrichtung nach einem der Ansprüche 1 bis 10, **dadurch gekennzeichnet, daß** die Leiter (2, 3) und die jeweiligen Zuleitungen (4, 5) aus einem mit einer elektrisch leitenden Komponente versehenen Kunststoffmaterial bestehen.

13. Vorrichtung nach Anspruch 12, **dadurch gekennzeichnet, daß** als elektrisch leitende Komponente Metallfasern verwendet werden.

14. Vorrichtung nach Anspruch 12, **dadurch gekennzeichnet, daß** die elektrisch leitende Komponente ein pulverförmiges oder feinkörniges elektrisch leitendes Material, insbesondere Metallpulver oder Graphit, ist.

15. Vorrichtung nach einem der Ansprüche 1 bis 14, **dadurch gekennzeichnet, daß** die Leiter (2, 3) und ihre Zuleitungen (4, 5) elektrisch leitend beschichtet sind.

16. Vorrichtung nach einem der Ansprüche 1 bis 15, **dadurch gekennzeichnet, daß** die Leiter (2, 3) und ihre Zuleitungen (4, 5) Kunststoffspritzteile sind.

17. Vorrichtung nach einem der Ansprüche 1 bis 10, **dadurch gekennzeichnet, daß** die Leiter (2, 3) und ihre Zuleitungen (4, 5) Metallteile sind.

18. Vorrichtung nach Anspruch 17, **dadurch gekennzeichnet, daß** die Leiter (2, 3) und ihre Zuleitungen (4, 5.) Metall-Spritzgußteile sind.

19. Vorrichtung nach Anspruch 17, **dadurch gekennzeichnet, daß** die Leiter (2, 3) und ihre Zuleitungen (4, 5) Blech-Stanzteile sind.

20. Vorrichtung nach einem der Ansprüche 1 bis 19, **dadurch gekennzeichnet, daß** die Einrichtung (13), mittels derer die beiden Gruppen von Leitern (2, 3) auf unterschiedliche elektrische Potentiale bringbar sind, eine elektrische Hochspannungsquelle umfaßt, deren Pole direkt oder indirekt mit je einer der Zuleitungen (4, 5) verbunden sind.

21. Vorrichtung nach einem der Ansprüche 1 bis 20, **dadurch gekennzeichnet, daß** ein Handgriff (20) vorgesehen ist.

22. Vorrichtung nach Anspruch 21, **dadurch gekennzeichnet, daß** in dem Handgriff (20) Kammern zur Aufnahme der Einrichtung (13), mittels derer die beiden Gruppen von Leitern (2, 3) auf unterschiedliche elektrische Potentiale bringbar sind, und ggf. wenigstens einer elektrischen Batterie vorgesehen sind.

23. Vorrichtung nach einem der Ansprüche 1 bis 22, **dadurch gekennzeichnet, daß** Mittel zum Einstellen wenigstens zweier unterschiedlicher Stromstärken und/oder unterschiedlicher elektrischer Spannungen, die bei Benutzung der Vorrichtung durch die Gruppen von Leitern fließen können, vorgesehen sind.

24. Vorrichtung nach einem der Ansprüche 1 bis 23, **dadurch gekennzeichnet, daß** die Leiter mit einer elektrisch leitenden Antihaft-Beschichtung versehen sind oder aus einem elektrisch leitenden Material mit Eigenschaften eines Antihaftmaterials bestehen.

25. Form zur Herstellung eines Formteils, welches eine Gruppe von zueinander parallel in einer Ebene verlaufenden, langgestreckten dünnen Leitern (2, 3), die von einer Zuleitung (4, 5) kammzinkenartig abzweigen für eine Vorrichtung nach einem der Ansprüche 1 bis 18.

26. Form nach Anspruch 25, **dadurch gekennzeichnet, daß** die Form derart ausgebildet ist, daß die Leiter (2, 3) an ihren freien Enden (2') eine Verdickung (9) besitzen.

27. Form nach Anspruch 25 oder 26, **dadurch gekennzeichnet, daß** die Form derart ausgebildet ist, daß mit ihr ein einstückiges Formteil herstellbar ist, welches zwei Gruppen von Leitern umfaßt, die jeweils von einer Zuleitung (4, 5) kammzinkenartig abzweigen, wobei die Zuleitung (4) einer Gruppe der Zuleitung (5) der anderen Gruppe gegenüberliegt und alle Leiter (2, 3) in einer Ebene parallel zueinander verlaufen und die der jeweiligen Zuleitung abgewandten Endbereiche der Leiter (2, 3) über jeweils eine Sollbruchstelle (29) mit der anderen Zuleitung verbunden sind.

28. Verfahren zur Herstellung einer Vorrichtung zum Töten und/oder Betäuben von Insekten, wobei die Vorrichtung umfaßt
- einen isolierenden Rahmen,
- zwei Gruppen von im bestimmungsgemäßen Montagezustand zueinander parallel in etwa einer Ebene verlaufenden, langgestreckten dünnen Leitern und
- eine Einrichtung, mittels derer die beiden Gruppen von Leitern auf unterschiedliche elektrische Potentiale bringbar sind,
- wobei die Leiter jeder Gruppe von jeweils einer Zuleitung kammzinkenartig abzweigen und
- wobei die Zuleitung einer Gruppe der Zuleitung der anderen Gruppe gegenüberliegt und die Leiter der einen Gruppe in besagter etwa einen Ebene zwischen die Leiter der anderen Gruppe eingreifen, ohne daß es zu einem elektrischen Kontakt zwischen den Leitern kommt,
**dadurch gekennzeichnet,**
- **daß** wenigstens ein einstückiges Formteil verwendet wird, daß sowohl die Leiter einer Gruppe als auch deren Zuleitung darstellt, wobei die Leiter an ihren freien Enden jeweils eine Verdickung besitzen, und
- **daß** das Formteil in einen Rahmen eingelegt wird, in welchem Aufnahmen für die Verdickungen gebildet sind.

29. Verfahren nach Anspruch 28, **dadurch gekennzeichnet, daß** ein zweiteilig ausgebildeter Rahmen verwendet wird, der aus zwei zueinander zumindest partiell komplementären Rahmenteilen besteht.

30. Verfahren nach Anspruch 29, **dadurch gekennzeichnet, daß** die Rahmenteile nach dem Einlegen des oder der Formteils/Formteile miteinander verrastet werden.

31. Verfahren nach Anspruch 29 oder 30, **dadurch gekennzeichnet, daß** ein Formteil verwendet wird, das sowohl die Leiter jeder Gruppe als auch die Zuleitungen bildet.

32. Verfahren nach Anspruch 31, **dadurch gekennzeichnet, daß** das Formteil, das sowohl die Leiter jeder Gruppe als auch die Zuleitungen bildet, in eines der Rahmenteile eingelegt wird und daß das andere Formteil auf das Rahmenteil aufgedrückt wird, wobei jede Gruppe von Leitern und die entsprechende Zuleitung von der oder den anderen Gruppe(n) von Leitern und der/den entsprechenden Zuleitung(en) getrennt wird/werden.

33. Verfahren zur Herstellung einer Vorrichtung zum Töten und/oder Betäuben von Insekten, wobei die Vorrichtung umfaßt
- einen isolierenden Rahmen,
- zwei Gruppen von im bestimmungsgemäßen Montagezustand zueinander parallel in etwa einer Ebene verlaufenden, langgestreckten dünnen Leitern und
- eine Einrichtung, mittels derer die beiden Gruppen von Leitern auf unterschiedliche elektrische Potentiale bringbar sind,
- wobei die Leiter jeder Gruppe von jeweils einer Zuleitung kammzinkenartig abzweigen und
- wobei die Zuleitung einer Gruppe der Zuleitung der anderen Gruppe gegenüberliegt und die Leiter der einen Gruppe in besagter etwa einen Ebene zwischen die Leiter der anderen Gruppe eingreifen, ohne daß es zu einem elektrischen Kontakt zwischen den Leitern kommt,
**dadurch gekennzeichnet,**
- **daß** wenigstens ein einstückiges Formteil verwendet wird, daß sowohl die Leiter einer Gruppe als auch deren Zuleitung darstellt, wobei die Leiter an ihren freien Enden jeweils eine Verdickung besitzen, und
- **daß** das Formteil zumindest partiell mit einem nichtleitenden Kunststoff derart umspritzt wird, daß der isolierende Rahmen gebildet wird.
